Europäisches Patentamt

(19) European Patent Office

Office européen des brevets

(11) Numéro de publication: **0 241 620**
**B1**

(12) **FASCICULE DE BREVET EUROPEEN**

(45) Date de publication du fascicule du brevet:
**15.03.89**

(51) Int. Cl.⁴: **B63B 1/12, B63B 1/38, B60V 3/06**

(21) Numéro de dépôt: **86400817.2**

(22) Date de dépôt: **16.04.86**

(54) Formes de coque pour navire à effet de surface à quilles latérales à deux modes de navigation.

(43) Date de publication de la demande:
**21.10.87 Bulletin 87/43**

(45) Mention de la délivrance du brevet:
**15.03.89 Bulletin 89/11**

(84) Etats contractants désignés:
**DE GB IT NL SE**

(56) Documents cités:
**DE-B- 2 407 498**
**FR-A- 918 390**
**GB-A- 1 210 973**
**GB-A- 1 453 184**
**US-A- 3 847 103**
**US-A- 4 506 618**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées(FR)**

(72) Inventeur: **Balquet, Robert, 35, rue Le Marois, F-75016 Paris(FR)**
Inventeur: **Baureau, Robert, 10, Avenue Maximilien Robespierre, F-94400 Vitry/Seine(FR)**
Inventeur: **Bertrand, Jean-Paul, 15, Boulevard Exelmans, F-75016 Paris(FR)**
Inventeur: **Guezou, Jean-Pierre Résidence les "Acacias", 11, Clos Pérault, F-91200 Athis Mons(FR)**
Inventeur: **Carron, Philippe, 2, square des Marguerites, F-94000 Créteil(FR)**

ACTORUM AG

## Description

La présente invention concerne des formes de coque perfectionnées pour des navires à effet de surface comportant une structure centrale munie de deux quilles latérales, et susceptibles de se déplacer soit en mode de sustentation, soit en mode de navigation archimédienne.

Dans un tel navire, la sustentation est réalisée par un coussin d'air, ce coussin étant délimité, en dessous de la structure centrale, d'une part par les deux quilles latérales, et, d'autre part, à l'avant et à l'arrière, par deux dispositifs de fermeture. Lorsque le coussin est alimenté en air sous pression, le navire se trouve soulevé dans une position pour laquelle seule la zone inférieure extrême de ces deux quilles reste dans l'eau, l'air ne pouvant échapper du coussin que par dessous les deux dispositifs de fermeture. Dans une telle position sustentée, le navire peut atteindre des vitesses élevées d'un nombre de Froude supérieur ou égal à 1 sous l'effet de propulseurs qui peuvent être des hélices ou bien des hydrojets.

Lorsque le coussin d'air n'est pas alimenté, les fermetures peuvent être relevées et le navire flotte alors sur ses deux quilles latérales, en navigation archimédienne.

Ce type de navire à effet de surface est bien connu; il est décrit par exemple dans les brevets FR 2 422 535, FR 1 569 807 et US 4 271 779.

De façon générale, les navires à effet de surface du type précité ont été conçus et réalisés pour fonctionner le plus souvent en mode de sustentation sur le coussin d'air, le mode de navigation archimédienne n'étant qu'un mode de déplacement accessoire à faible vitesse.

La présente invention vise la conception d'un navire à effet de surface du type précité dont les formes de coque perfectionnées assurent des performances optimales à la fois en mode de sustentation et en mode de navigation archimédienne.

On se propose également de propulser par exemple ce navire par des hydrojets en mode de sustentation, par des hélices ou ces hydrojets en mode de navigation archimédienne. Il est apparu, de par les études et les essais conduits par le Demandeur, que la forme même des deux quilles latérales pouvait être optimisée pour les deux modes de navigation.

L'invention a donc pour objet des formes de coque pour navire à effet de surface comportant une structure sustentée du type catamaran munie de deux quilles latérales, réunies par une structure centrale, adapté pour naviguer soit en navigation archimédienne sur coque, soit en sustentation sur coussin d'air, les quilles latérales délimitant avec deux dispositifs de fermeture le coussin d'air central de sustentation (C), caractérisées en ce que chacune des deux quilles comporte un segment de varangue, une paroi latérale interne tournée vers le coussin (C), et une paroi latérale externe, le segment de varangue étant incliné vers l'extérieur par rapport à l'horizontale et se·relevant de l'arrière vers l'avant de la quille jusqu'à un V profond à l'extrême avant, la paroi interne étant sensiblement verticale à l'avant et à l'arrière et présentant dans sa partie centrale supérieure un renflement, la paroi externe évoluant de l'arrière vers l'avant d'une courbe concave à une courbe pleine, de telle sorte que des performances optimales soient atteintes pour les deux modes de sustentation et de navigation archimédienne.

En mode de sustentation, les formes décrites ci-après coopèrent de manière efficace. En effet, selon une caractéristique de l'invention, l'intersection du segment de varangue et de la paroi interne de chaque quille définit une ligne de quille sensiblement rectiligne. De ce fait, la profondeur d'immersion de la paroi interne, au-dessus de cette ligne de quille et en dessous de la ligne de coussin (Nc), reste toujours au moins égale à un minimum pour assurer l'étanchéité latérale du coussin d'air. Le navire prend une assiette telle qu'à la vitesse nominale, la profondeur d'immersion de la paroi interne reste sensiblement constante de l'arrière à l'avant de cette ligne de quille. En effet, à cette vitesse, le système de vagues produit par le coussin est caractérisé par une pente constante de l'avant à l'arrière.

On remarquera en outre que la surface mouillée des quilles en mode de sustentation est limitée. L'immersion, sensiblement constante et au moins égale à $\underline{a}$ des quilles du côté du coussin C, assure à celui-ci des meilleures conditions d'étanchéité latérale. En d'autres termes, l'air du coussin s'échappe, comme on l'a déjà indiqué, en dessous des parties inférieures des dispositifs de fermeture et non en dessous des lignes de quilles.

Il est important de noter par ailleurs que la forme de la surface définie par le segment de varangue est voisine d'un paraboloïde hyperbolique. De ce fait, l'assiette du navire n'est pas influencée par des variations de la pression dynamique agissant sur cette surface. Il est bien connu en effet que pour une telle surface la résultante des forces induites par un écoulement s'applique sensiblement au même point quelle que soit l'incidence. Autrement dit encore, l'assiette du bâtiment n'est pas influencée par des variations de pression dynamique agissant sur la surface de varangue, prise comme le lieu géographique des segments de varangue.

Enfin, la position du point d'application de la résultante des forces latérales (centre de dérive effectif) peut être controlée en ajustant convenablement le relevé du segment de varangue.

Selon une autre caractéristique de l'invention, le segment de varangue à l'arrière du navire présente une largeur transversale suffisante au niveau de laquelle est prévue l'implantation des prises d'eau des hydrojets.

On remarquera que la profondeur verticale d'immersion de la paroi externe à l'arrière du navire, au-dessus de l'intersection du segment de varangue et de la paroi interne et en-dessous de la ligne de flottaison (Fs), est sensiblement égale à la profondeur d'immersion verticale $\underline{a}$ de la paroi interne, pour éviter l'ingestion d'air par les prises d'eau.

Selon une autre caractéristique de l'invention, la partie avant des quilles est à la fois effilée et relevée pour faciliter leur pénétration dans l'eau.

Pour ce qui est du mode de navigation archimédienne, la forme choisie pour les quilles n'est pas moins efficace. En effet, la paroi externe s'évase dans le haut, notamment à l'avant et à l'arrière, pour former des volumes assurant un appel hydrostatique en roulis et en tangage. La paroi interne est sensiblement verticale et plane à l'avant et à l'arrière du navire. Entre ces deux extrémités, la partie supérieure de la paroi interne va en se renflant vers le centre des quilles, en définissant ainsi un renflement interne de la quille. Ces volumes renflés permettent en outre d'assurer, d'une part sans ballastage un centrage longitudinal du navire, lequel reste par ailleurs sensiblement le même dans les deux modes de navigation, et d'autre part un rappel hydrostatique supplémentaire en roulis et en tangage comme on l'a vu ci-dessus.

Selon une caractéristique avantageuse de l'invention, la concavité de la paroi externe à la partie arrière du navire permet l'installation d'une hélice pour la propulsion en mode de navigation archimédienne.

Il est par ailleurs essentiel d'observer que les renflements de la quille mentionnée ci-dessus permettent d'assurer la portance du navire en mode de navigation archimédienne sans abaissement trop considérable du navire par rapport à la surface de l'eau. En d'autres termes, ces volumes permettent de diminuer la distance verticale entre la ligne de flottaison archimédienne (Fa) et la ligne de flottaison en sustentation (Fs). Une telle caractéristique sert à limiter les impacts des vagues sur la structure centrale.

Enfin, les volumes renflés permettent évidemment de dégager des espaces utiles à l'aménagement des quilles.

L'ensemble des caractéristiques précitées coopère pour donner au navire selon l'invention un comportement optimisé pour les deux modes de navigation, la navigation archimédienne, en particulier, devenant utilisable en tant que telle pour avoir une grande autonomie.

D'autres caractéristiques et avantages de l'invention apparaîtront de la description qui va suivre, en se référant aux dessins annexés, qui représentent une forme de réalisation préférentielle de l'invention.

Sur ces dessins:

– la figure 1 représente une vue en perspective de trois quarts arrière d'un navire à effet de surface selon la présente invention;

– la figure 2 représente en perspective dans une vue analogue à la précédente les deux quilles latérales de ce navire en vis-à-vis, toutes les autres parties du navire ayant été supprimées;

– la figure 3 est une vue de bout de l'extrémité arrière de la quille de droite;

– la figure 4 représente une vue de côté schématique du navire selon l'invention;

– la figure 4a représente une vue de côté de la quille de droite avec différentes sections transversales échelonnées, pour bien montrer leur évolution de l'arrière vers l'avant du navire;

– la figure 4b représente une vue de dessus schématique de la quille de gauche.

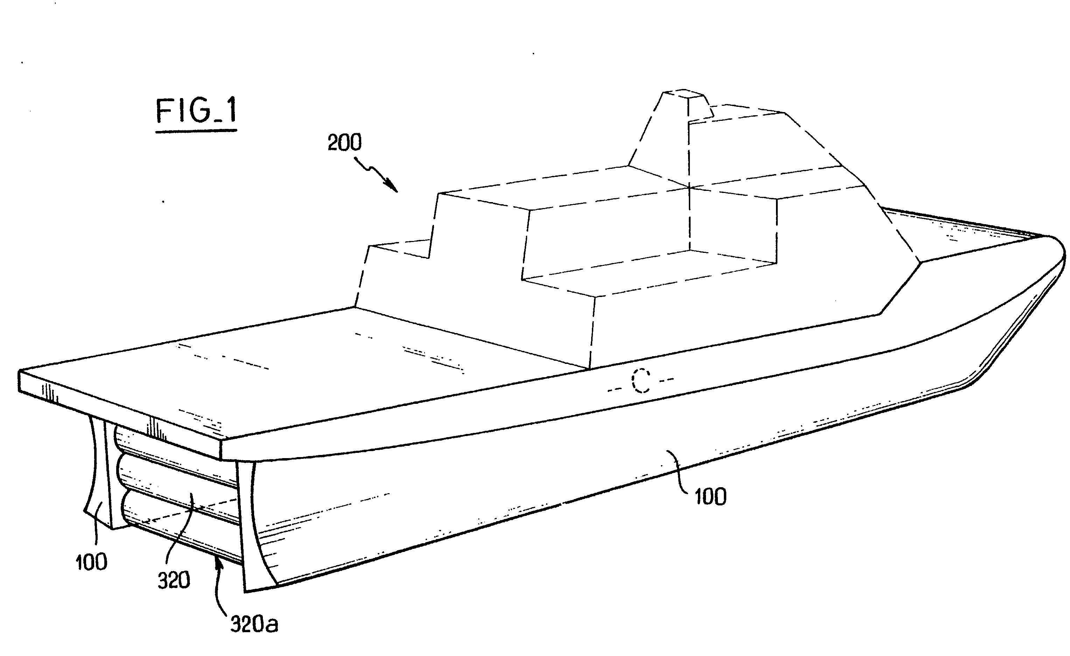

La figure 1 illustre la constitution générale du navire selon l'invention. Il comporte essentiellement deux quilles ou coques latérales 100, réunies par une structure centrale 200.

La structure centrale 200 a de préférence la forme d'un caisson central encastré dans chacune des deux quilles latérales 100.

Bien qu'une telle structure ne fasse pas partie de la présente invention, on pourra se reporter à la demande de brevet français intitulée "Structure de navire à effet de surface à quilles latérales" déposée ce même jour et qui donne le détail d'une telle structure centrale.

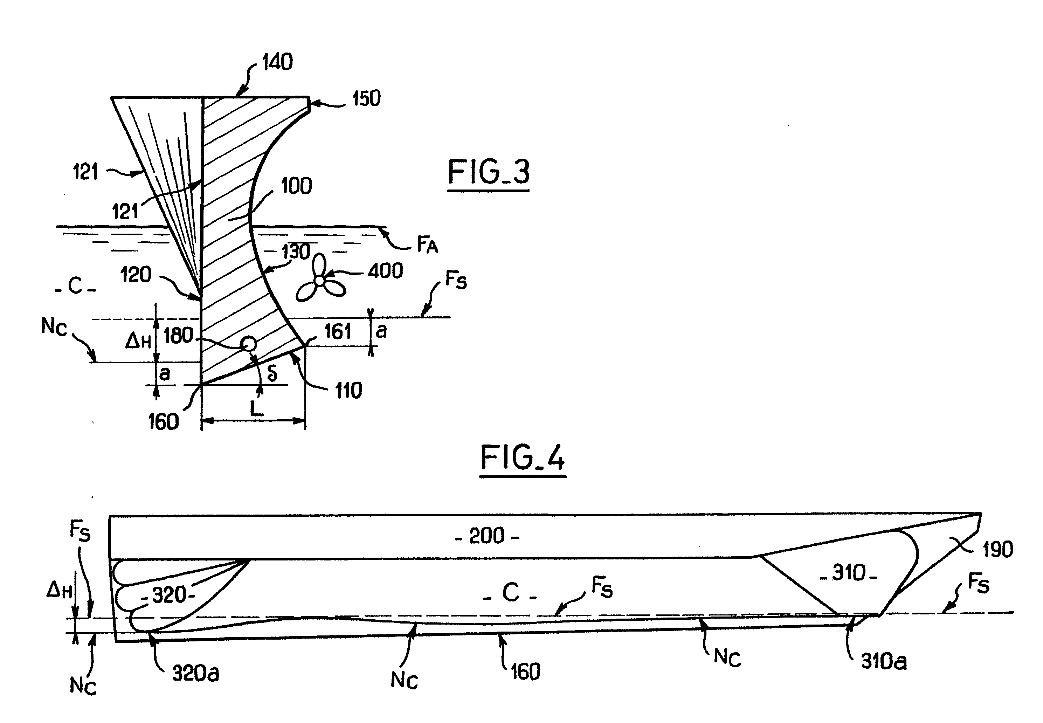

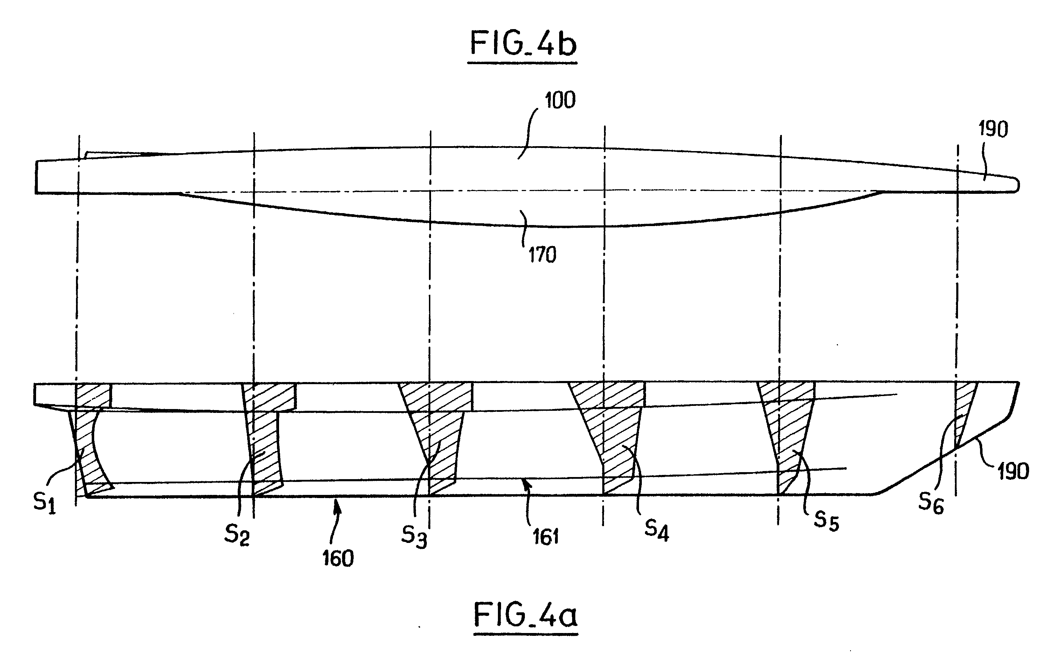

D'une manière connue en elle-même, les deux quilles 100 coopèrent avec deux dispositifs de fermeture à l'avant et à l'arrière, 310 et 320 (voir figure 4), pour délimiter, entre les quilles 100, et en dessous de la structure 200, un espace central C, formant coussin de sustentation alimenté par un générateur d'air sous pression, l'air pouvant s'échapper sous les dispositifs de fermeture dans les zones 310a, 320a.

Les dispositifs de fermeture 310 et 320 sont du type relevable, de telle sorte que le navire selon l'invention peut se déplacer soit en sustentation sur son coussin, soit en navigation archimédienne sur ses deux quilles 100.

En ce qui concerne les dispositifs de relevage, on pourra se reporter aux demandes de brevet français citées ci-dessous, toutes deux au nom du Demandeur:

– "Navire à quilles latérales à effet de surface muni d'une fermeture avant perfectionnée de coussin de sustentation" N° 8 417 168, pour la fermeture avant.

– "Navire à effet de surface à quilles latérales comportant des moyens de sustentation perfectionnés" N° 8 417 169, pour la fermeture arrière.

Comme on l'a exposé, le problème de l'invention est d'optimiser la forme des quilles latérales 100 pour l'obtention de performances optimales aussi bien en mode de sustentation qu'en mode de navigation archimédienne.

Les deux quilles 100 disposées respectivement à droite et à gauche du navire ont une forme symétrique par rapport au plan central vertical longitudinal du navire. Les différents éléments ainsi symétriques des deux quilles sont désignés par les mêmes références.

De façon générale, chaque quille 100 comporte essentiellement un segment de varangue ou de fond 110, une paroi latérale interne 120, une paroi latérale externe 130, et un segment supérieur horizontal 140. Dans l'exemple représenté, un rebord vertical 150 réunit le segment 140 à la paroi externe 130.

Sont particulièrement caractéristiques le profil évolutif du segment de varangue 110 et la forme évolutive des deux parois interne et externe 120 et 130.

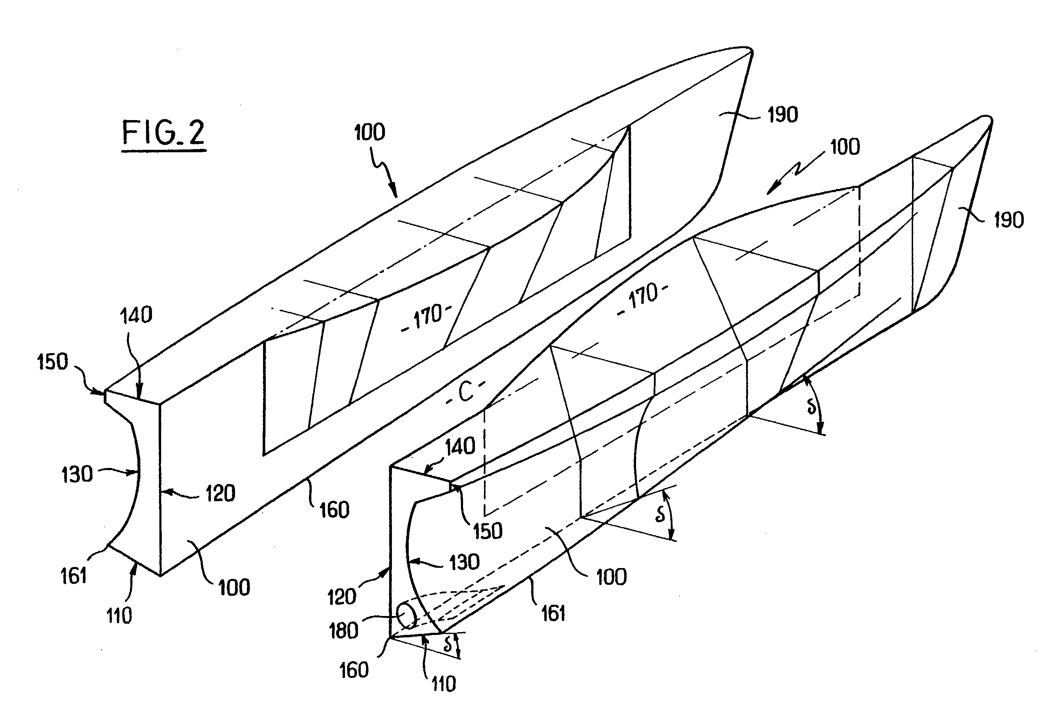

Comme on le voit notamment sur les figures 2, 3 et 4a, le segment de varangue 110 est rectiligne et incliné d'un angle δ variable, d'une valeur initiale d'une vingtaine de degrés à l'arrière du navire et qui croît régulièrement jusqu'à une valeur d'une soixantaine de degrés à la partie avant, là où la quille commence à s'effiler. La figure 4a montre particulièrement bien cette évolution, puisqu'on y voit six sections transversales de la quille référencées S1 à S6, de l'arrière à l'avant, la section S1 se retrouvant d'ailleurs sur la vue arrière de la figure 3.

Avec une telle variation, ce segment de varangue 110, définit de l'arrière vers l'avant une surface réglée du type paraboloïde hyperbolique.

L'intersection du segment de varangue 110 et de la paroi interne 120 constitue la ligne de quille 160. Cette ligne de quille est sensiblement rectiligne et horizontale en mode de navigation archimédienne, alors qu'elle est légèrement inclinée en mode de sustentation. L'intersection du segment de varangue 110 et de la paroi externe 130 constitue une ligne sensiblement rectiligne 161 qui se relève légèrement de l'arrière vers l'avant par rapport à la ligne de quille 160.

Les formes de coques ci-dessus étant bien définies, il faut y ajouter, pour une bonne compréhension de l'invention, les éléments fonctionnels suivants.

Comme représenté particulièrement à la figure 3, la ligne de flottaison en mode de navigation archimédienne FA, se situe à peu près à mi-hauteur de la quille 100.

En mode de sustentation, le coussin central C soulève le navire et ses quilles, et on atteint ainsi une ligne de flottaison en mode sustenté FS, alors que, du côté du profil interne 120, le coussin C repousse l'eau jusqu'à un niveau NC comme représenté sur les figures 3 et 4.

Les formes ainsi adoptées pour les deux quilles 100 sont celles qui, comme on va mieux le comprendre, permettent d'optimiser le comportement du navire dans chacun de ses deux modes de navigation.

En mode de sustentation, les coques 100 sont très peu immergées. Comme on le voit sur la figure 3, la hauteur d'immersion à l'arrière des quilles est sensiblement la même, soit a, pour la paroi interne par rapport à la ligne de coussin NC, et pour la paroi externe, par rapport à la ligne de flottaison FS. La largeur horizontale L du segment de varangue 110 est relativement grande, comme représenté, à l'arrière du navire, et diminue de l'arrière vers l'avant. Comme on le voit sur la figure 4, la ligne de coussin NC reste sensiblement parallèle à la ligne de quille 160, ce qui signifie que la hauteur d'immersion de la paroi interne 120 en dessous du coussin C reste sensiblement constante de l'arrière vers l'avant du navire, en n'étant pas de préférence inférieure à a.

De telles formes de quille et de telles conditions d'immersion pour le mode de sustentation entraînent des avantages certains.

Tout d'abord, dans la région la plus immergée, à l'arrière des quilles, en dessous de la ligne de flottaison FS, on peut installer des propulseurs à jets d'eau à circuit court de propulsion, ou hydrojets, simplement référencés 180 sur les figures 2 et 3. Les prises d'eau alimentant ces hydrojets sont situées en dessous de la surface FS.

Comme on l'a déjà vu, les fermetures avant et arrière 310 et 320 définissant le coussin de sustentation (C) sont disposées dans des zones où les quilles 100 ont une paroi interne sensiblement verticale. Cet agencement autorise un débattement vertical aisé desdites fermetures et facilite la transition entre le mode sustenté, où les fermetures sont dans une position déployée, et le mode de navigation archimédienne pour lequel elles sont relevées.

La paroi externe 130 évolue de l'arrière à l'avant, depuis une courbe concave formant échancrure, comme représenté à la figure 2 jusqu'à une forme pleine, visible sur les sections S4 et S5.

Dans la partie arrière du navire, la paroi externe 130 de chaque quille 100 présente une échancrure 130 dans laquelle vient se loger l'hélice de propulsion 400, en-dessous de la ligne de navigation archimédienne (Fa).

Bien que cette caractéristique ne concerne pas la présente invention, l'hélice 400 est de préférence relevable. A cet égard, l'on peut se reporter à la demande de brevet français au nom du Demandeur N° 8 415 755 intitulée "Système de relevage d'une hélice de propulsion marine pour navire à effet de surface à quilles latérales".

L'évolution des formes de quilles de l'arrière vers l'avant permet d'obtenir le meilleur compromis autorisant à la fois de hautes performances en mode de sustentation et en mode de navigation archimédienne. A titre d'exemple, pour un navire du type précité de 80 mètres de long, on atteint une vitesse de l'ordre de 50 nœuds en mode de sustentation et propulsion par hydrojets, et de 20 nœuds en mode de navigation archimédienne et propulsion par hélices.

## Revendications

1. Formes de coque pour navire à effet de surface comportant une structure sustentée du type catamaran munie de deux quilles latérales (100), réunies par une structure centrale (200), adapté pour naviguer soit en navigation archimédienne sur coque, soit en sustentation sur coussin d'air, les quilles latérales (100) délimitant avec deux dispositifs de fermeture (310, 320) le coussin d'air central de sustentation (C), caractérisées en ce que chacune des deux quilles (100) comporte un segment de varangue (110), une paroi latérale interne (120), tournée vers le coussin (C), et une paroi latérale externe (130), le segment de varangue étant incliné vers l'extérieur par rapport à l'horizontale et se relevant de l'arrière vers l'avant de la quille jusqu'à un V profond à l'extrême avant la paroi interne (120) etant sensiblement verticale à l'avant et à l'arrière et présentant dans sa partie centrale supérieure (170) un renflement, la paroi externe (130) évoluant de l'arrière vers l'avant d'une courbe concave à une courbe pleine, de telle sorte que des performances optimales soient atteintes pour les deux modes de sustentation et de navigation archimédienne.

2. Formes de coque pour navire à effet de surface selon la revendication 1, caractérisé en ce que l'intersection du segment de varangue (110) et de la paroi interne (120) de chaque quille (100) définit une ligne de quille (160) sensiblement rectiligne, et que, en modes de sustentation, la profondeur d'immersion de la paroi interne (120) au-dessus de cette ligne de quille (160), et en dessous de la ligne de coussin (Nc), reste toujours au moins égale à un minimum pour assurer l'étanchéité latérale du coussin d'air.

3. Navire à effet de surface selon l'une quelconque des revendications 1 ou 2, caractérisé en ce que le segment de varangue (110) à l'arrière du navire présente une largeur transversale au niveau de laquelle est prévue l'implantation des prises d'eau (181) des hydrojets (180).

4. Formes de coque pour navire à effet de surface selon l'une quelconque des revendications 1 à 3, caractérisé en ce que le segment de varangue (110) et la paroi externe (130) ont une intersection (161) sensiblement rectiligne, et en ce que, à l'arrière du navire l'immersion verticale de la paroi externe (130) est sensiblement rectiligne, et égale à la profondeur d'immersion de la paroi interne pour éviter l'ingestion d'air par les prises d'eau (181).

5. Formes de coque pour navire à effet de surface selon l'une quelconque des revendications 1 à 4, caractérisé en ce que, en navigation archimédienne, au moins une hélice (400) est associée à chaque coque (100) en étant disposée dans l'échancrure arrière définie par la paroi externe (130) en dessous de la ligne de flottaison archimédienne (Fa).

6. Formes de coque pour navire à effet de surface selon l'une quelconque des revendications 1 à 5, caractérisé en ce que le segment de varangue (110) définit de l'arrière vers l'avant une surface réglée du type paraboloïde hyperbolique.

7. Formes de coque pour navire à effet de surface selon l'une quelconque des revendications 1 à 6, caractérisé en ce qu'il comporte des fermetures relevables (310, 320) à l'arrière et à l'avant du navire, au droit des zones sensiblement verticales de la paroi interne de chaque quille (100).

8. Formes de coque pour navire à effet de surface selon l'une quelconque des revendications 1 à 7, caracterisé en ce que la partie avant basse (190) de chaque quille (100) est effilée en lame de couteau.

9. Formes de coque pour navire à effet de surface selon l'une quelconque des revendications 1 à 8, caractérisé en ce que le centrage du navire est assuré en navigation archimédienne par la coopération du volume délimité par les renflements (170) des coques engendrant une poussée d'Archimède, du volume arrière réduit des quilles et du volume avant augmenté dans sa partie haute.

## Claims

1. Hull shapes for surface effect ship including a catamaran type supported structure with two side keels (100) connected by a central platform (200), able to operate either as a buoyant displacement on said shapes or by an air cushion, the side keels (100) confining, with two sealing devices (4310, 320), the supporting central air cushion (c), characterized in that each side wall (100) includes a floor segment (110), an inner side wall (120) facing the cushion (c), and an outer side wall (130), the floor segment being slanted outwards with respect to the horizontal line and rises from the after part to the fore part of the keel until forming a deep V at the most fore part, the inner side wall (120) being nearly vertical in the after and fore part and presents a bulge in its upper central part (170), the outer side wall (130) evolves from a concave curve to a full curve resulting in optimum performance for both modes of operation either as an air cushion vehicle or as a buoyant displacement vehicle.

2. A surface effect ship, as set forth in Claim 1, characterized in that the intersection of the floor segment (110) with the inner side wall (120) of each keel (100) defines a keel line (160) roughly rectilinear, and, in "cushioning" mode of operation, the immersion depth of the inner side wall (120) above this keel line (160) and below the cushion line (Nc) remains always equal to a minimum value to insure the side tightness of the air cushion.

3. A surface effect ship, as set forth in claim 1 or 2, characterized in that the floor segment (110) at the rear of the ship has a breadth allowing to install the water intakes of hydrojets (180).

4. A surface effect ship, as set forth in any one of claims 1 to 3, characterized in that the floor segment (110) and the outer sidewall (130) intersect on a roughly rectilinear line (161), and, at the rear of the ship, the vertical immersion depth of the outer side wall is approximately rectilinear and equal to the immersion depth of the inner side wall to prevent air entering through the water intakes (181).

5. A surface effect ship, as set forth in any claim 1 to 4, characterized in that in buoyant mode of operation, at least one propeller (400) is associated to each keel (100) and is located within the after cutout defined by the outer side wall (130) below the waterline (Fa) in buoyant mode.

6. A surface effect ship, as set forth in any claim 1 to 5, characterized in that the floor segment (110) defines from the rear to the bow a surface corresponding to an hyberbolic paraboloid.

7. A surface effect ship, according to any claim 1 to 6, characterized in that it includes raisable seals (310, 320) at the bow and the rear of the ship at right angles with the roughly vertical parts of the inner side wall of each keel (100).

8. A surface effect ship, as set forth in any claim 1 to 7, characterized in that the fore lower part (190) of each keel (100) is slender like a knife edge.

9. A surface effect ship, as set forth in any claim 1 to 8, characterized in that the ship centering in buoyant mode of operation is provided by the cooperation of the volume delimited by the hull bulges (170) generating the buoyancy lift, of the limited after volume of keels, and of the fore volume increased in its upper part.

## Patentansprüche

1. Rumpfgestalten für Flächeneffekt-Wasserfahrzeug mit einer aufgetriebenen Struktur des Katamaran-Types, bestehend aus zwei, über ein zentrales kastenförmiges Verbindungselement (200) miteinander verbundenen Schwimmkörpern, die den notwendigen Auftrieb entweder nach dem Verdrängungsprinzip oder nach dem Luftkissenprinzip erzeugen, wobei die seitlichen Schwimmkörper (100) in Zusammenwirkung mit zwei Abschluß-Luftkissen (C) abgrenzen, dadurch gekennzeichnet, daß jeder der beiden Schwimmkörper (100) einen Bodenwrangenabschnitt (110), eine luftkissenseitige Wand (120) sowie eine äussere Wand (130) beträgt, wobei der Bodenwrangenabschnitt gegen außen in Bezug auf die horizontale Ebene geneigt ist und sich vom hinteren zum vorderen Teil des Schwimmkörpers allmählich bis stevenseitig zu einem tiefeingeschnittenen V hochrichtet, während die innere Wand (120) beinahe senkrecht in deren vorderen und hinteren Teil verläuft und im deren mittleren Teil eine Ausbauchung (170) aufweist, und die äussere Wand (130) von hinten nach vorn aus einer hohlen Wölbung zu einer vollen Wölbung übergeht, um zu gewähren, daß optimale Leistungen für beide Fahrtarten, d.h. bei der Verdrängungsfahrt bzw. Luftkissenfahrt erzielt werden.

2. Rumpfgestalten für Flächeneffekt-Wasserfahrzeug nach Anspruch 1, dadurch gekennzeichnet, daß der Schnitt des Bodenwrangenabschnittes (110) und der inneren Wand (120) des jeden Schwimmkörpers (100) eine beinahe gerade Kiellinie bestimmt, und daß bei Luftkissenfahrt die Eintauchtiefe der inneren Wand (120) über diese Kiellinie (160) und unter der Luftkissenlinie (Nc) einen Wert einhält, der immer einer Mindesteintauchtiefe zur Aufrechterhaltung der seitlichen Abdichtung des Luftkissens entspricht.

3. Rumpfgestalten für Flächeneffekt-Wasserfahrzeug nach einem beliebigen Anspruch 1 oder 2, dadurch gekennzeichnet, daß der Bodenwrangenabschnitt am Heck eine genügende seitliche Breite zum Einbau der Einlaßöffnungen (181) der Wasserstrahlantriebe (180) beträgt.

4. Rumpfgestalten für Flächeneffekt-Wasserfahrzeug nach einem beliebigen Anspruch 1 bis 3, dadurch gekennzeichnet, daß der Bodenwrangenabschnitt (110) und die äussere Wand (130) eine beinahe gerade Schnittlinie bestimmen und daß am Heck des Wasserfahrzeuges der eingetauchte Abschnitt der äusseren Wand (130) beinahe geradlinig verläuft und der Eintauchtiefe der inneren Wand entspricht, um das Ansaugen von Luft durch die Wassereinlaßöffnungen (181) zu vermeiden.

5. Rumpfgestalten für Flächeneffekt-Wasserfahrzeug nach einem beliebigen Anspruch 1 bis 4, dadurch gekennzeichnet, daß bei der Verdrängungsfahrt mindestens eine Schraube (400) jedem Schwimmkörper zugeordnet ist, wobei diese Schraube in der hinteren, gewölbten Aussparung der äusseren Wand (130) unter der Verdrängungswasserlinie (Fa) angeordnet ist.

6. Rumpfgestalten für Flächeneffekt-Wasserfahrzeug nach einem beliebigen Anspruch 1 bis 5, dadurch gekennzeichnet, daß der Verlauf des Bodenwrangenabschnittes (110) von hinten nach vorn eine Regelfläche eines hyperbolischen Paraboloids bestimmt.

7. Rumpfgestalten für Flächeneffekt-Wasserfahrzeug nach einem beliebigen Anspruch 1 bis 6, dadurch gekennzeichnet, daß das Wasserfahrzeug vorne und hinten hochstellbare Abschlußvorrichtungen (310, 320) beträgt, die im Bereich der beinahe senkrechten Abschnitte der inneren Wand jedes Schwimmkörpers (100) angeordnet sind.

8. Rumpfgestalten für Flächeneffekt-Wasserfahrzeug nach einem beliebigen Anspruch 1 bis 7, dadurch gekennzeichnet, daß der vordere untere Teil (190) des jeden Schwimmkörpers (100) wie eine Messerklinge spitz zuläuft.

9. Rumpfgestalten für Flächeneffekt-Wasserfahrzeug nach einem beliebigen Anspruch 1 bis 8, dadurch gekennzeichnet, daß das Zentrieren des Wasserfahrzeuges bei der Verdrängungsfahrt durch die Mitwirkung des durch die Ausbauchungen (170) der Schwimmkörper abgegrenzten Volumens, des reduzierten Volumens der hinteren schmalen Schwimmkörperteile sowie des in dessen oberen Teils erweiterten Volumens der vorderen Schwimmkörperteile erfolgt.

FIG_1

200

100

100

320

320a

EP 0 241 620 B1

FIG.2

EP 0 241 620 B1

## FIG. 3

## FIG. 4

EP 0 241 620 B1

## FIG.4b

100

190

170

EP 0 241 620 B1

$S_1$   $S_2$   $S_3$   161   $S_4$   $S_5$   $S_6$   190

160

## FIG.4a